# EUROPEAN PATENT APPLICATION

(11) **EP 4 310 808 A1**
(43) Date of publication of application: **24.01.2024**
(21) Application number: 22202414.3
(22) Date of filing: 19.10.2022
(51) Int. Cl.: G07F 19/00

(54) **DETECTING MOUNTING OF AN OBJECT AT A TERMINAL DEVICE**

(30) Priority: 18.07.2022 US 202217866789
(71) Applicant: NCR Corporation, Atlanta, GA 30308-1007 (US)
(72) Inventor: WHYTOCK, Alexander William, Blairgowrie PH10 6TL (GB); BROOKES, Gregory, Glasgow G14 0DA (GB); SINGH, Rajveer, Fife KY2 5JP (GB)
(74) Representative: Secerna LLP

(57) **Abstract**

A system for detecting mounting of a card skimmer at an automated teller machine receives detection data from sensors. The system converts the detection data from the time domain to the frequency domain using a wavelet transform to generate a wavelet matrix of coefficients. The system includes a first machine learning model to identify features in the wavelet matrix. The system generates a rain alert signal based on the identified features. The system includes a long short-term memory recurrent neural network model to determine a sequence from the detection data, the sequence including (i) an idle state, (ii) a hand approach state, and (iii) a card skimmer mounting state. The system generates a tamper alert signal based on the sequence determination.

## Description

### Field of the Invention

This invention relates to a computer-implemented method, a data processing system, and a computer program product for detecting mounting of an object, such as a card skimmer, at a terminal device, such as an automated teller machine (ATM).

### Background of the Invention

It is known to attempt to detect a card skimmer placed by a thief on a fascia of an ATM. If such a card skimmer is mounted to the ATM, this may enable the thief to steal a customer's card information. However, known approaches for detecting card skimmers suffer from various drawbacks, technical solutions to which are disclosed herein.

### Summary of the Invention

Certain embodiments of the present invention provide a system for more accurately detecting mounting of an object, such as a card skimmer, at a terminal device, such as at the fascia of an ATM. Certain embodiments of the present invention provide a technical solution that addresses at least the technical problem of false positive skimmer alerts, which can occur, for example, in the event of the ATM being exposed to rain. In particular, rain may cause technical problems with a capacitive sensor signal. In addition, certain embodiments of the present invention enable faster data processing and data formatting after the raw data has been obtained.

According to a first aspect of the present invention there is provided a computer-implemented method for detecting mounting of an object at a terminal device, the method comprising: receiving detection data from one or more sensors, generating a wavelet matrix based on the detection data, and generating an ambient environment alert based on the wavelet matrix.

Aptly, the ambient environment alert comprises an ambient weather alert.

Aptly, the ambient weather alert comprises a rain alert.

Aptly, the method further comprises: converting the detection data from a time domain to a frequency domain using a wavelet transform to obtain converted detection data, and generating the wavelet matrix based on the converted detection data.

Aptly, the method further comprises: identifying one or more features in the wavelet matrix, wherein generating the ambient environment alert being comprises generating the ambient environment alert based on the one or more identified features.

Aptly, identifying the one or more features in the wavelet matrix comprises identifying the one or more features using a first machine learning model.

Aptly, the first machine learning model comprises a convolutional neural network model.

Aptly, the method further comprises: determining, based on the detection data, a sequence comprising (i) an idle state during a first time period, (ii) an approach state during a second time period, and (iii) an object mounting state during a third time period.

Aptly, the method further comprises: generating a tamper alert based on the determined sequence.

Aptly, during the idle state, the detection data comprises a signal having a substantially constant amplitude at a first level.

Aptly, during the approach state, the detection data comprises a signal having a negative peak amplitude that is lower than the first level.

Aptly, during the object mounting state, the detection data comprises a signal having a substantially constant amplitude at a third level that is higher than the first level.

Aptly, determining the sequence comprises determining the sequence using a second machine learning model.

Aptly, the second machine learning model comprises a long short-term memory recurrent neural network model.

Aptly, the sequence determination occurs at least partially in parallel with the wavelet matrix generation.

Aptly, the terminal device comprises an automated teller machine device.

Aptly, the object comprises a card skimmer device.

Aptly, the method further comprises: identifying a plurality of peaks in a historical data set, identifying a subset of the historical data set based on the identified plurality of peaks, identifying a set of features from the subset of the historical data, augmenting the identified set of features using a labelled data set to obtain a training data set, and training, based on the training data set, at least one of a first machine learning model or a second machine learning model to perform ambient weather detection or tamper detection, respectively.

According to a second aspect of the present invention there is provided a data processing system for detecting mounting of an object at a terminal device, the system comprising a processor and a memory storing machine-executable instructions, the processor configured to access the memory and execute the machine-executable instructions to: receive detection data from one or more sensors, generate a wavelet matrix based on the detection data, and generate an ambient environment alert based on the wavelet matrix.

According to a third aspect of the present invention there is provided a computer program product comprising a non-transitory computer-readable medium storing machine-executable instructions executable by a processor to perform a method, comprising: receiving, over a first period of time, first detection data from one or more sensors, generating a wavelet matrix based on the first detection data, generating an ambient environment alert signal based on the wavelet matrix, receiving, over a second period of time, second detection data from the one or more sensors, determining a sequence from the second detection data, and generating a tamper alert signal responsive to determining the sequence.

According to an embodiment of the invention, there is provided a computer-implemented method for detecting mounting of an object at a terminal device, the method comprising the steps of: receiving detection data from one or more sensors, generating a wavelet matrix based on the detection data, and generating an ambient environment alert based on the wavelet matrix. In example embodiments, the terminal device may comprise an automated teller machine device. In example embodiments, the method may detect mounting of an object at a bezel of the automated teller machine device. In example embodiments, the object may comprise a card skimmer device.

The ambient environment alert may comprise an ambient weather alert. The ambient weather alert may comprise a rain alert. By generating the rain alert signal, various embodiments of the invention reduce the incidence of false positive card skimmer alerts that would otherwise be generated in scenarios in which the ATM encounters rain or other ambient weather conditions, but no attempt to mount a card skimmer device is made. In particular, embodiments of the invention provide a technical solution that addresses the technical problem of false positive card skimmer alerts such as when exposure of the ATM to rain or other ambient weather conditions causes technical problems with signals from capacitive sensors. Embodiments of the invention may thus achieve the technical effects of high accuracy card skimmer alerts and minimization of false positive card skimmer alerts due to ambient weather events such as rain. By reducing false positive card skimmer alerts, embodiments of the invention achieve enhanced reliability and reduce unnecessary maintenance visits by a technical specialist. The ATM may thus remain functioning correctly and customer transactions may remain unaffected.

The ambient weather alert is not limited to a rain alert and may comprise other types of weather alerts as well for detecting types of weather conditions around the ATM other than rain. For example, the ambient weather alert may be a wind alert, a cold weather alert, or a hot weather alert. Wind or cold or hot weather may cause false positive readings from the sensors. In particular, rapid temperature changes may produce mechanical expansion or contraction of the fascia or the brackets of the ATM that may cause false positive readings. In some cases, this may indicate incorrectly built or incorrectly fitted hardware.

In example embodiments, the wavelet matrix retains localised time data for more accurate rain alert signal generation. The detection data received from the sensors may be time series data. By capturing the localized time data, the period of time during which an alert was generated can be determined. Capturing and retaining the localized time data also allows for running a machine learning model on data retrieved from ATMs that lack a machine learning capability such that those time periods during which it may have been raining can be identified. This may be particularly relevant to scenarios in which false positive card skimmer alerts are suspected to be present within the data logs.

In some embodiments, a wavelet transform may be used to convert the detection data from the time domain to the frequency domain to generate the wavelet matrix. The wavelet transform may be a continuous wavelet transform or may be a discrete wavelet transform. The wavelet transform may include passing the detection data through a high pass filter and/or a low pass filter. For instance, rain may create high frequency signals, such that passing the detection data through a high pass filter may retain the high frequency rain signals and discard/ignore other lower frequency signals such as noise.

In some embodiments, the method may comprise the step of identifying one or more features in the wavelet matrix and generating the ambient environment alert based on the one or more identified features. An example identified feature may be an increase in real rain noise. This noise may be a higher frequency, but lower amplitude signal compared to the idle signal data. Over a period of several hours, build-up of moisture on the card reader - such as in cases where the ATM bezel design may lead to pooling of some water - may cause a change in amplitude of the signal. By focusing on the frequency change, embodiments of the invention enable the other changes in signal data to be ignored. The one or more features may be identified from the wavelet matrix using a first machine learning model. The first machine learning model may provide a highly accurate and highly efficient means of identifying the features. The first machine learning model may comprise a convolutional neural network model. The convolutional neural network model may be updated over time as new training data becomes available. If an upgrade or improvement becomes available, the first machine learning model may be quickly updated based on a software update without requiring technically complex and time-consuming hardware modifications.

In some embodiments, the method may comprise the step of determining, based on the detection data, a sequence that includes (i) an idle state during a first time period, (ii) an approach state during a second time period, and (iii) an object mounting state during a third time period. The second time period may be subsequent to the first time period. The third time period may be subsequent to the second time period. In some embodiments, the method may comprise the step of generating a tamper alert signal based on the determined sequence. Determining the sequence and then generating the tamper alert signal based thereon may enable a more accurate detection of mounting of a card skimmer to an ATM. For instance, by generating the tamper alert signal responsive to the sequence being identified, embodiments of the invention reduce the incidence of false positive card skimmer alerts. This enhanced detection capability leads to improved customer confidence in the operation of the ATM. A reduction in false positive card skimmer alerts results in less time-consuming technical maintenance of the ATM by a technical specialist.

In some embodiments, the detection data may have a substantially constant amplitude at a first level during the first time period. Further, the detection data may have a negative peak amplitude during the second time period, the negative peak being substantially lower than the first level. In addition, the detection data may have a substantially constant amplitude at a third level during the third time period, the third level being substantially higher than the first level. In another embodiment, the detection data may have a short period, e.g., a few seconds, of very high and low peaks during the second time period. The short period of very high and low peaks may be indicative of a card skimmer being mounted to the ATM.

In some embodiments, the sequence may be determined using a second machine learning model. The second machine learning model may provide a highly accurate and highly efficient means of identifying the sequence. The second machine learning model may comprise a deep learning model. The deep learning model may comprise a long short-term memory recurrent neural network model. The long short-term memory recurrent neural network model is highly effective at filtering out noise in signals. The long short-term memory recurrent neural network model may be updated over time as new training data on a new card skimmer attack becomes available. If an upgrade or improvement to the long short-term memory recurrent neural network model becomes available, the second machine learning model may be updated based on a software update without requiring technically complex and time-consuming hardware modifications. In some embodiments, the second machine learning model may comprise a support vector machine.

In some embodiments, in lieu of a sequence determination, the second machine learning model may comprise a one-dimensional (1-D) convolutional neural network model configured to identify one or more distinguishing features in the detection data. The 1-D convolutional neural network model may provide increased accuracy when analysing 1-D data, such as time-series data from an ATM.

In some embodiments, the one or more sensors may comprise a capacitive-based sensor, a mmWave Radar, and/or a time-of-flight sensor. In some embodiments, the capacitive-based sensor may be mounted adjacent to a magnetic card reader device. In some embodiments, the capacitive-based sensor may be configured to generate the detection data upon the object being placed adjacent to an exterior portion of the bezel.

According to an example embodiment of the invention, a method may comprise the steps of: generating a set of training data, and training at least one of the first machine learning model and the second machine learning model based on the set of training data. By automatically generating the set of training data, the method may avoid the otherwise time-consuming and repetitive manual process of data extraction and labelling of associated activities. As such, the method results in a faster process of creating the training data from the large, raw data set. Moreover, the cleaner training data results in improved accuracy of the overall machine learning model.

In some embodiments, the set of training data may be generated by: receiving a set of historical data, and identifying one or more features in the set of historical data, each of the one or more features representing a corresponding activity. It is not uncommon to have very large sets of historical data. Manual analysis of such a large set of historical data would be a hugely time-consuming task. Embodiments of the invention enable an automated analysis of historical data that, in turn, enables the automatic identification of activities, such as a presence of a card skimmer at an ATM; a presence of a customer hand at the ATM; an idle status of the ATM; a transaction status of the ATM; different types of transactions based on information from other devices, such as replenishment when the fascia door is open, cheque processing, cash recycling, contactless card touches, or screen touches for menu parsing; and so forth. Certain embodiments of the invention also enable the automatic labelling of the activities accordingly.

In some embodiments, the one or more features may be identified by: determining one or more peaks in the set of historical data and generating one or more sub-sets of data based on the one or more determined peaks. In some embodiments, each sub-set of data includes padding data on either side of the peak. The padding data may make it easier to visualize the feature. The padding data may provide information of the context of the activity, such as an 'IDLE' state before or a 'SKIMMER' state after, and the peak may provide information on a 'HAND ACTIVITY'.

In some embodiments, the one or more peaks may be determined by applying a moving average and a standard deviation to the set of historical data. The set of training data may be generated by: receiving a set of label data, and augmenting the one or more identified features with the set of label data. The label data may be automatically created based on transaction activity data from other devices, such as replenishment when the fascia door is open, cash taken, and the like.

The invention also provides, in another aspect, a data processing system for detecting mounting of an object at a terminal device, the system comprising a processor configured to access a memory or other computer-readable medium storing machine-executable instructions and execute the instructions to: receive detection data from one or more sensors, generate a wavelet matrix based on the detection data, and generate an ambient environment alert based on the wavelet matrix.

In a further aspect of the invention there is provided a computer program product comprising instructions capable of causing a computer system to perform a method of the invention when the computer program product is executed on the computer system. The computer program product may be embodied on a record medium, or a carrier signal, or a read-only memory.

### Brief Description of Drawings

Embodiments of the present invention will now be described hereinafter, by way of example only, with reference to the accompanying drawings, in which:
Fig. 1 is a hybrid system and flow diagram for detecting mounting of an object at a terminal device, according to example embodiments of the disclosed technology,
Fig. 2 is a graph illustrating detection data captured according to example embodiments of the disclosed technology,
Fig. 3 is a graph illustrating detection data captured according to example embodiments of the disclosed technology,
Fig. 3a is a graph illustrating detection data captured according to example embodiments of the disclosed technology,
Fig. 4 is an extract of instruction code of a wavelet transform according to example embodiments of the disclosed technology,
Fig. 5 is a wavelet matrix according to example embodiments of the disclosed technology,
Figs. 6 and 7 are scalogram images according to example embodiments of the disclosed technology,
Fig. 8 is a graph illustrating an ambient environment alert according to example embodiments of the disclosed technology,
Fig. 9 is a flow diagram of a method for training machine learning models according to example embodiments of the disclosed technology,
Fig. 9a is a graph illustrating historical data of the method of Fig. 9,

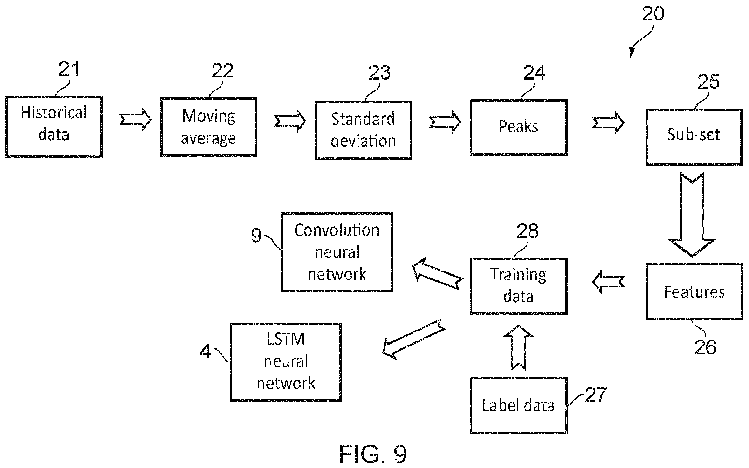

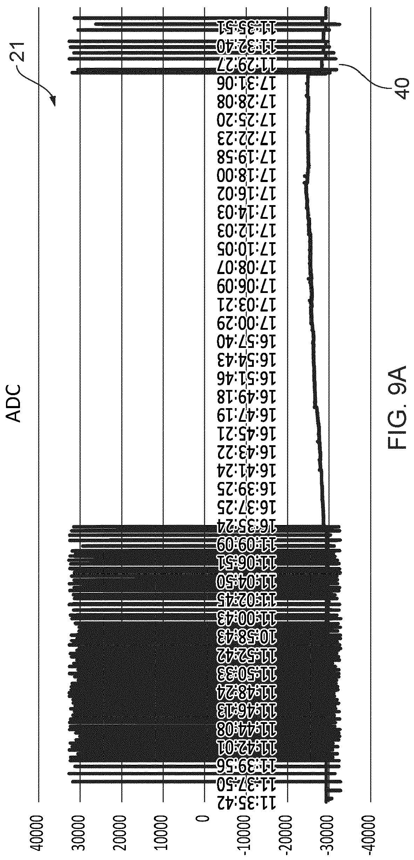

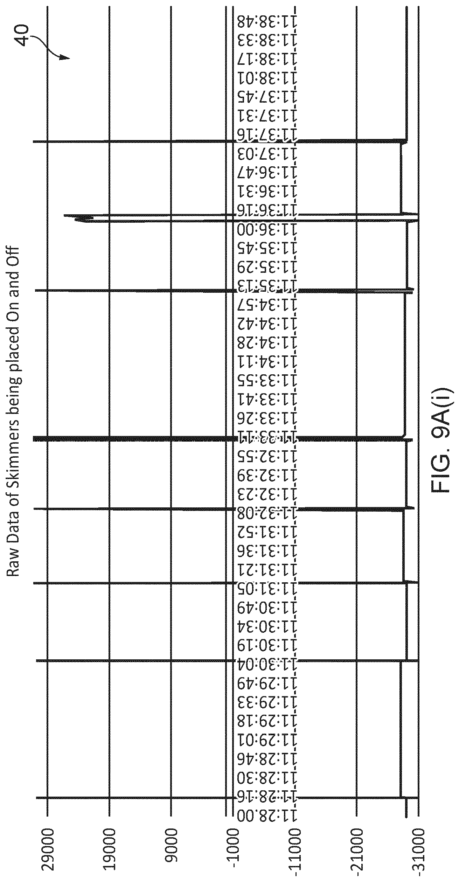

Fig. 9a(i) is a graph illustrating part of the historical data of Fig. 9a,

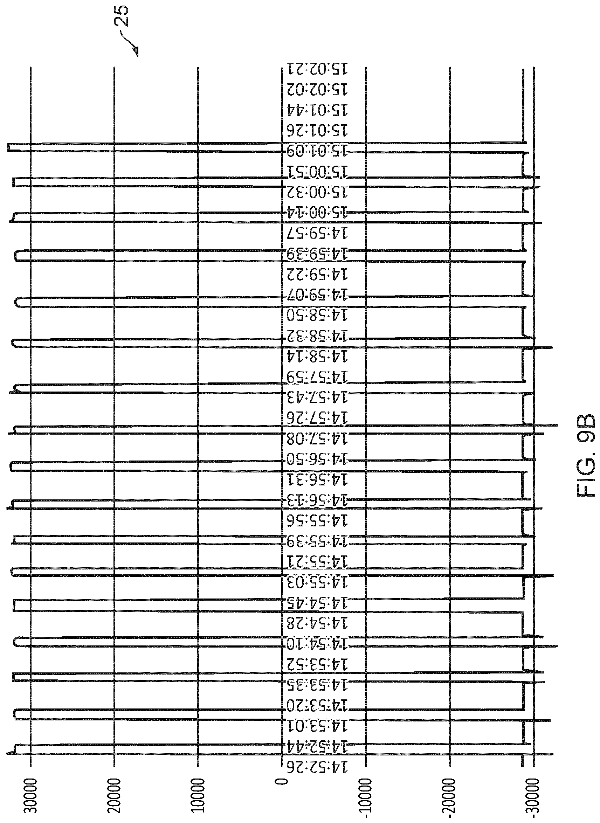

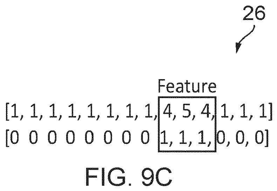

Fig. 9b is a graph illustrating sub-sets of data of the method of Fig. 9,
Fig. 9c is an image illustrating features of the method of Fig. 9,

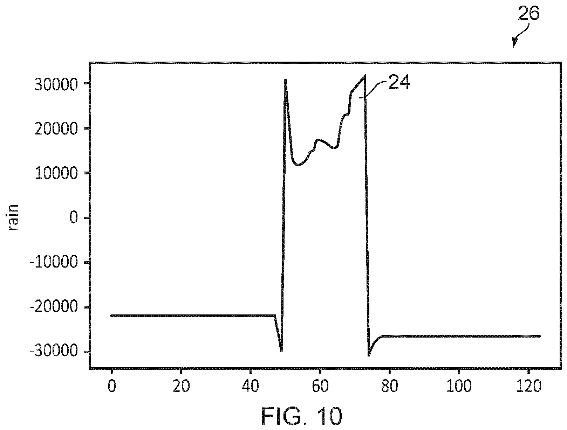

Fig. 10 is a graph illustrating a peak of the method of Fig. 9, and

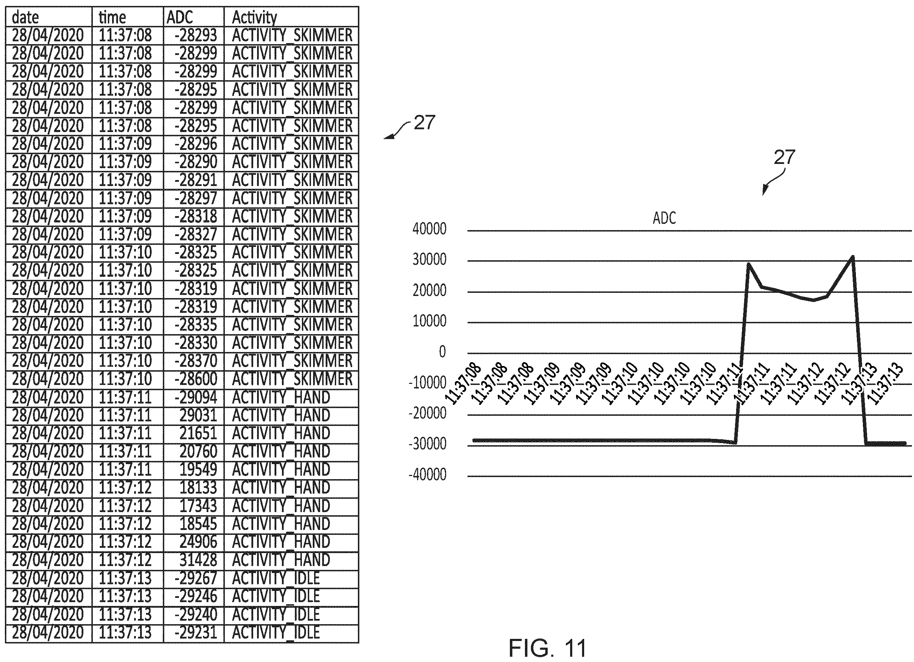

Fig. 11 is a graph illustrating label data of the method of Fig. 9.

In the drawings like reference numerals refer to like parts.

### Detailed Description

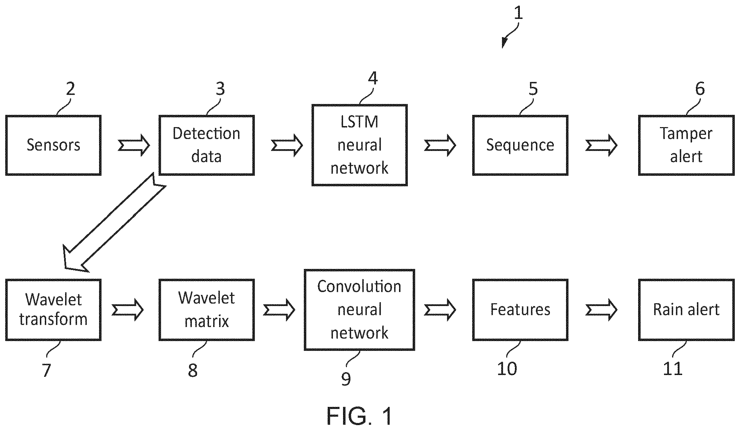

Referring to the drawings, and initially to Figs. 1 to 8 thereof, there is illustrated a computer-implemented data processing system 1 configured to detect mounting of an object at a self-service terminal device, in accordance with example embodiments of the disclosed technology. In an embodiment, the system 1 may be provided in the form of a skimmer protection solution (SPS). In certain scenarios, criminals may attempt to steal credit card details by utilizing a card skimmer device that records the magnetic stripe present on the card. The system 1 may detect the presence of a card skimmer device placed on the facia of an automated teller machine (ATM), for example. More specifically, the system 1 may be employed to detect mounting of a card skimmer device at a bezel of an ATM, for example.

In an embodiment, the system 1 may include a microcontroller configured to manage the functions of the system 1, to gather data from sensors/outputs to effectors used by the system 1, and to report to the ATM PC core, for example via a USB 2.0. In example embodiments, the system 1 may perform the following functions: detect unusual objects placed within the vicinity of the card reader entry/exit slot; report the presence of unusual objects placed within the vicinity of the card reader entry/exit slot; report faults that disable or inhibit the function of detecting unusual objects (e.g., electromagnetic disruption of unusual objects, those having magnetic read heads, etc.) placed within the vicinity of the card reader entry/exit slot; and so forth.

As illustrated in Fig. 1, the system 1 receives detection data 3 from a plurality of sensors 2. In some embodiments, the sensors 2 may be distinct from the system 1, while in other embodiments, the system 1 may include the sensors 2. In an example embodiment, the sensors 2 are provided in the form of capacitive-based sensors. The capacitive-based sensors 2 may be mounted adjacent to a magnetic card reader device. The capacitive-based sensors 2 may generate the detection data 3 responsive to a card skimmer device being placed adjacent to an exterior portion of the bezel of the ATM. For example, the detection data 3 may be captured from a series of capacitive sensors 2 around the card (magstripe) reader of the ATM. The capacitive sensors 2 may detect the presence of unusual objects which have magnetic read heads in the vicinity of the card reader entry/exit slot. The system 1 may include an analog to digital converter (ADC) that receives, at its input channel, continuous analog signals from a transmitter-receiver electrode pair. The system core driver may select the channel to scan. As an example, the selected channel may be sampled every 180 ms and an event may be returned to the system core driver with 32-bit readings. In one embodiment, the ADC converts the readings from selected ones of the sensors 2 into unsigned 32-bit digital values, which may be transmitted to the processor at a rate of 180 ms per channel.

In example embodiments, the system 1 includes a second machine learning model 4. The second machine learning model 4 may be a deep learning model, such as a long short-term memory recurrent neural network (LSTM-RNN) model. While the machine learning model 4 may be referred to herein as an LSTM-RNN model for explanatory purposes, it should be appreciated that the model 4 is not limited to an LSTM-RNN model and may be any suitable machine learning model including any suitable type of neural network. The LSTM-RNN model 4 may determine a sequence 5 based on the detection data 3.

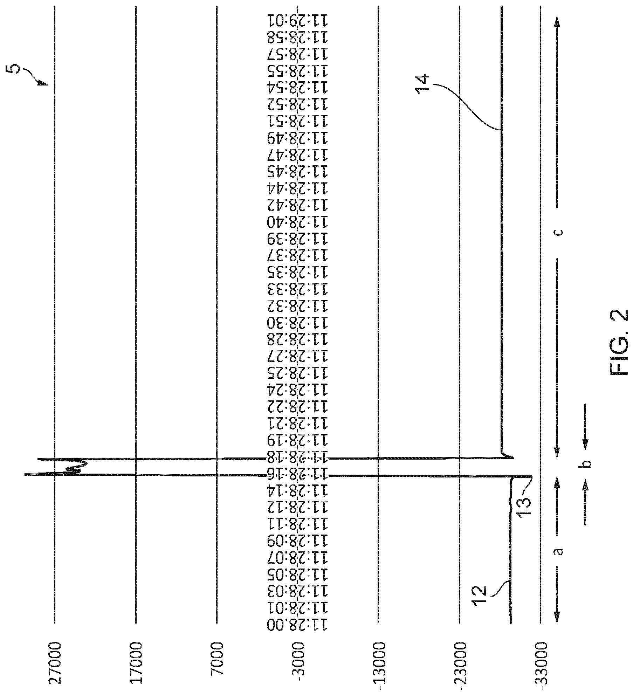

As illustrated in Fig. 2, in an example embodiment, the sequence 5 may include (i) an idle state during a first time period 'a', (ii) a hand approach state during a second time period 'b' subsequent to the first time period 'a', and (iii) a card skimmer mounting state during a third time period 'c' subsequent to the second time period 'b'. In the example of FIG. 2, the detection data 3 has a substantially constant amplitude at a first level 12 during the first time period 'a'. In addition, the detection data 3 has a negative peak amplitude 13 during the second time period 'b'. The negative peak 13 is lower than the first level 12 (Fig. 2). The detection data 3 has a substantially constant amplitude at a third level 14 during the third time period 'c'. The third level 14 is higher than the first level 12 (Fig. 2). The card skimmer mounting state indicates that the card skimmer device remains mounted to the bezel of the ATM. In example embodiments, when the card skimmer is placed on the bezel during time period 'b', the hand approach causes a signal spike to occur, which is then followed by an increase in signal amplitude from the amplitude 12 during time period 'a' to the amplitude 14 during time period 'c'. The increased amplitude 14 may remain for the duration that the skimmer remains on the bezel.

Referring again to FIG. 1, in example embodiments, the system 1 generates a tamper alert signal 6 based on the sequence determination 5. The tamper alert signal 6 may indicate that the card skimmer has been mounted to the bezel of the ATM. In example embodiments, the deep learning model 4 enhances the accuracy of the system's 1 card skimmer detection accuracy. The system 1 may be configured to collect data relating to different states/scenarios/events, such as an idle state, a skimmer mounting state, a hand approach state, transactions, and a weather event such as rain. Data related to these scenarios/events may be classified accordingly and fed through the LSTM-RNN model 4 to detect the sequence 5. In some embodiments, the LSTM-RNN model 4 may detect the sequence 5 as including and based on observing the first amplitude 12 corresponding to the idle state during the first time period 'a', the signal spike during the second time period 'b', and finally the increased amplitude 14 during the third time period 'c'. Optionally, the sequence 5 may be detected as further including the negative peak amplitude 13 observed during an initial portion of the second time period 'b'. The model 4, which may be trained using historical sensor data, may be configured to generate, based on the input sensor data, a classification result that indicates whether a card skimmer is present or not. In some embodiments, the LSTM-RNN model 4 may be particularly suited for detecting sequential data and learning from the context of a situation.

The LSTM-RNN model 4 may be trained to detect the sequence 5 and to generate the card skimmer alert 6 responsive to detection of the sequence 5. In some embodiments, the model 4 may, based on its training, ignore other signal sequences representative of legitimate activities, such as a hand approach alone, legitimate transactions, ambient weather such as rain, and the like, and refrain from generating the card skimmer alert 6 in such scenarios. In this manner, the model 4 aids in reducing false positive card skimmer alerts caused by other factors such as ambient weather conditions (e.g., rain). Rain can lead to a noisy and unpredictable signal. Such a signal could otherwise lead to a false positive card skimmer alert if not for the enhanced reliability provided by the model 4, which in example embodiments, is trained to detect the specific sequence 5 and generate the alert 6 responsive to detection of the sequence 5 rather than in response to other signal amplitude change sequences that may be reflective of legitimate, non-card skimmer related events.

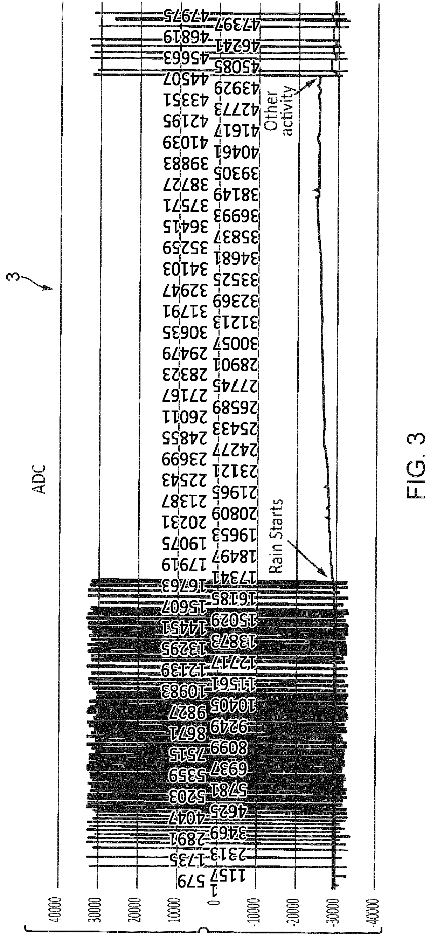

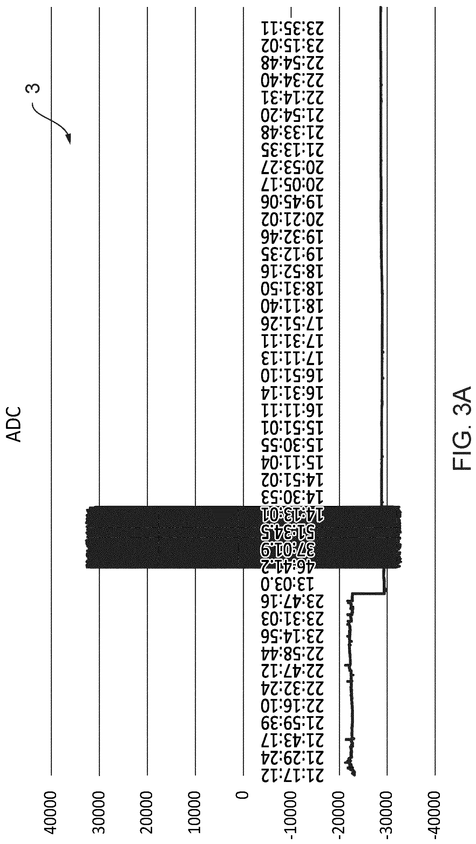

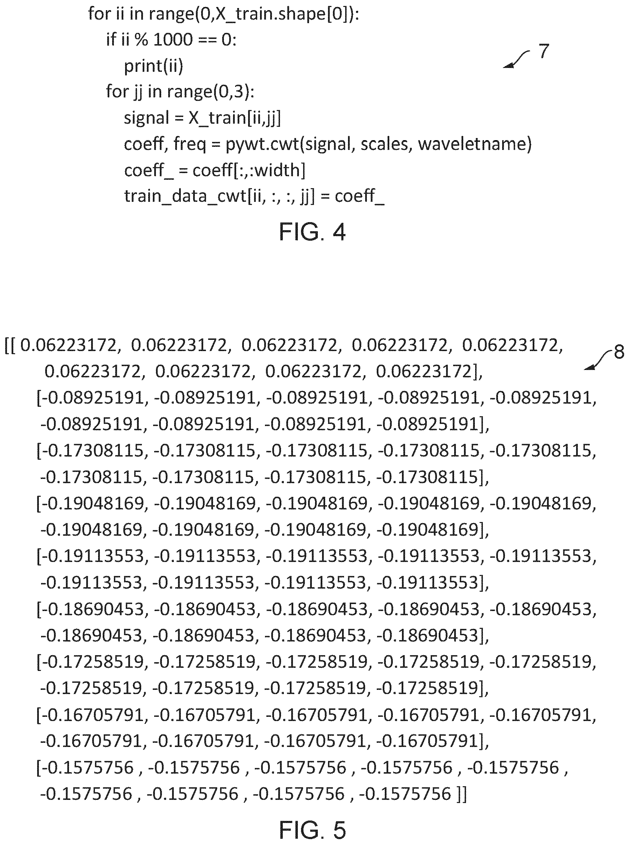

As illustrated in Fig. 1, in example embodiments, the system 1 converts the detection data 3 from the time domain to the frequency domain using a wavelet transform 7 to generate a wavelet matrix of coefficients 8. An example of detection data 3 is illustrated in Fig. 3a. An example of a wavelet transform 7 is illustrated in Fig. 4. An example of a wavelet matrix 8 is illustrated in Fig. 5. The wavelet matrix 8 of Fig. 5 is generated using the detection data 3 of Fig. 3a and the wavelet transform 7 of Fig. 4.

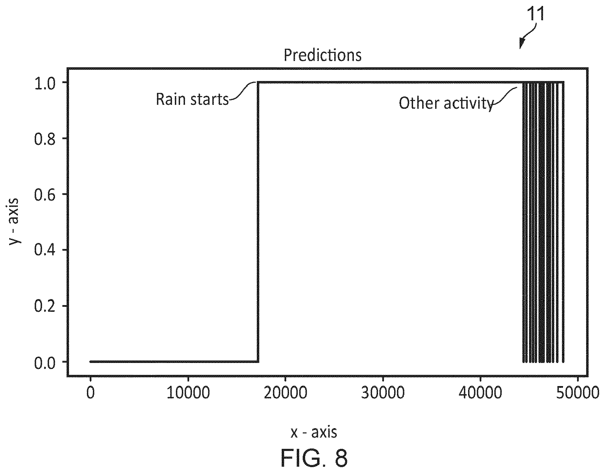

In example embodiments, the system 1 includes a first machine learning model 9. In some embodiments, the first machine learning model 9 is provided in the form of a convolutional neural network (CNN) model. The CNN model 9 may be configured to identify features 10 in the wavelet matrix 8. The system 1 may then generate an ambient environment alert signal 11 based on the identified features 10. The ambient environment alert signal 11 may comprise an ambient weather alert signal. The ambient weather alert signal may comprise a rain alert signal 11 (Fig. 8).

The system 1 addresses the technical problem of rain causing the signal 3 from the capacitive sensors 2 to become noisy. In particular, rain can cause a gradual build up in amplitude over time. Such noise or amplitude build-up could otherwise potentially lead to false positive card skimmer alerts. When the system 1 is exposed to rain, the signal 3 from the sensors 2 may become noisy. Over time, this may cause a gradual increase in the signal amplitude. Fig. 3 illustrates the detection data 3 with a build-up of amplitude of the signal from the sensors 2 over time due to rain. When this occurs, it may be difficult to distinguish between an increase in signal amplitude caused by rain compared to an increase in amplitude caused by an actual card skimmer being mounted to the ATM.

In example embodiments, to address this technical problem, the system 1 uses the wavelet transform 7 to analyse the change in frequency without losing the localised time information of the signal 3. The wavelet transform 7 retains information on both frequency and time for enhanced signal analysis. The wavelet transform 7 may be a mathematical function which divides a continuous time signal into separate scale components. The wavelet transform 7 may be discrete or continuous. In particular, the wavelet matrix 8 may provide a spectrum of frequencies along with an indication of when these frequencies occur.

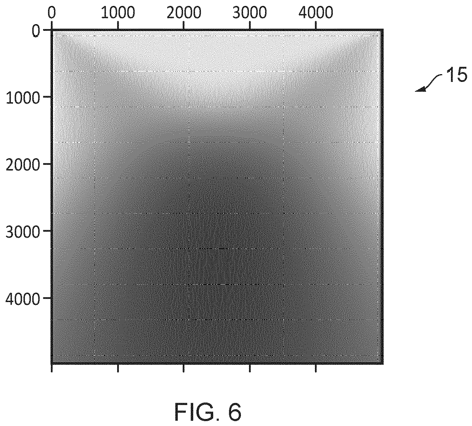

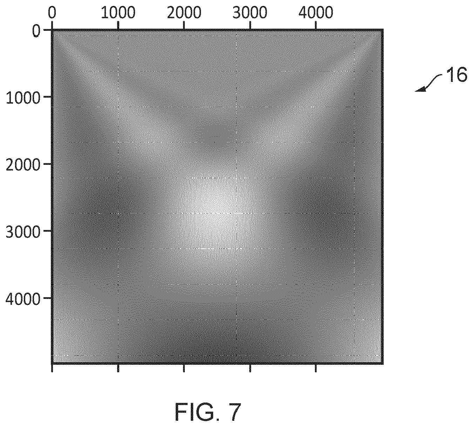

Alternatively, the system 1 may generate a scalogram based on the wavelet matrix 8. An example of a scalogram 15 is illustrated in Fig. 6. An example of another type of scalogram 16 is illustrated in Fig. 7. A scalogram is a visual representation of the information in the wavelet matrix of coefficients 8. The CNN model 9 may identify the features 10 in the scalogram.

In further detail, the scalogram may provide a means to view information about scale components. A scalogram may be a graph containing patterns which vary depending on the wavelet used. The amount of information shown in each scalogram depends on the window size used to analyse the signal data 3. An example of a scalogram image 15 produced by a Mexican hat wavelet transform is illustrated in Fig. 6. An example of a scalogram image 16 produced by a Morlet wavelet transform is illustrated in Fig. 7. The CNN model 9 may be configured to identify the distinguishing features 10 in the scalogram images with a high degree of accuracy. The system 1 may thus identify when it is raining based on these distinguishing features 10, and any false positive card skimmer alerts during rain may be removed.

In use, in example embodiments, the system 1 receives the detection data 3 from the capacitive-based sensors 2 (Fig. 1) responsive to a card skimmer device being placed adjacent to the exterior portion of the bezel. Based on the detection data 3, the LSTM-RNN model 4 determines the sequence 5 including (i) the idle state during the first time period 'a', (ii) the approach state during the second time period 'b', and (iii) the card skimmer mounting state during the third time period 'c'. The system 1 then generates the tamper alert signal 6 based on the sequence determination. In parallel, in example embodiments, the system 1 converts the detection data 3 from the time domain to the frequency domain using the wavelet transform 7 to generate the wavelet matrix 8. The CNN model 9 identifies the features 10 in the wavelet matrix 8. The system 1 then generates the rain alert signal 11 based on the identified features 10.

Referring now to Figs. 9 to 11, there is illustrated a computer-implemented data processing system 20 for training the LSTM-RNN model 4 and the CNN model 9. The system 20 may receive a large set of historical data 21 (Fig. 9a). The historical data 21 may include previous detection data from capacitive-based sensors 2 mounted adjacent to magnetic card reader devices. The capacitive-based sensors 2 may have generated the previous detection data during normal operation of the ATM, and also, potentially, upon card skimmer devices being placed adjacent to the exterior portion of bezels of the ATMs. Fig. 9a(i) illustrates a portion 40 of the historical data 21 of Fig. 9a. The historical data portion 40 represents the raw sensor data for a time period during which a card skimmer is being successively mounted to the ATM and removed from the ATM.

In example embodiments, the system 20 applies a moving average 22 and a standard deviation 23 to the set of historical data 21 based on a pre-defined threshold to identify a plurality of peaks 24 in the set of historical data 21. The system 20 may then generate a sub-set of data 25 based on each identified peak 24 (Fig. 9b). The sub-set of data 25 may include a pre-defined number of surrounding padding data points on either side of the identified peak 24. In this example, the peak value 24 is set as '1' and the surrounding padding data points on either side of the peak 24 are set as '0'. The system 20 may be configured to identify a set of features 26 in the set of historical data 21 using the sub-sets 25 (Fig. 9c). Each of the features 26 may represent an activity, such as a customer hand approaching the ATM or a card skimmer device being mounted to the ATM.

Each of the activities may be identified based on different patterns being observed for the peaks 24 in the capacitive sensor signal 21. For instance, in the case of a card skimmer event, a peak may be identified due to the hand approach followed by an increase in the average amplitude of the signal. The increase in the average signal amplitude may vary depending on the size of the card skimmer device. In the event that the card skimmer is removed, another peak may be identified followed by the signal amplitude returning to the same level as at the idle state. In the event that a peak is identified but is not followed by an increase in the average amplitude of the signal from its amplitude in the idle state, the system 20 may determine that only a hand approach or other normal user activity has occurred. In the event that a transaction is being performed at the ATM, the system 20 may identify a multitude of consecutive peaks.

In example embodiments, the system 20 reduces noise present within the data 21 by applying the moving window average 22 to calculate the mean value of all data points within the data 21. Then, for any new data points that are a certain predefined number of standard deviations away from the moving average 22, a signal may be detected. In some embodiments, signals may be either '0' or '1', where the latter represents the identified peak 24 within the data set 21. In example embodiments, the signals ('0' or '1') within the sub-set array 25 represent the indices within the data set 21 where the feature 26, such as a transaction, starts and ends. The feature 26 may be extracted with the extra padding data from before and after the feature 26. An example extracted feature 26 with peaks 24 is plotted in the graph illustrated in Fig. 10.

In example embodiments, the system 20 may receive a set of user pre-defined label data 27 (Fig. 11), and the system 20 may augment the identified features 26 with the set of label data 27 to generate a set of training data 28. The set of label data 27 may include information on the category of the type of hand approach, for example, a customer hand approach or a thief skimmer hand approach. The system 20 may then train the LSTM-RNN model 4 and the CNN model 9 based on the set of training data 28. The process of data extraction and labelling is typically time-consuming. The system 20 speeds up this process by extracting key features 26 from the large skimmer data set 21. The system 20 identifies, for example, features representative of hand activity, transactions, and skimmer activity within the large data set 21. As a result, the overall data pre-processing stage is faster and results in a cleaner training data set 28. Consequently, the resultant card skimmer detection is more accurate.

In example embodiments, in use, the system 20 receives the set of historical data 21 (Fig. 9). The system 20 applies the moving average 22 and the standard deviation 23 to the set of historical data 21 to identify the plurality of peaks 24 in the set of historical data 21. The system 20 generates the sub-set of data 25 based on each identified peak 24. The system 20 identifies the set of features 26 using the sub-sets 25. The system 20 receives the set of label data 27 and augments the identified features 26 with the set of label data 27 to generate the set of training data 28. The system 20 then trains the LSTM-RNN model 4 and the CNN model 9 based on the set of training data 28.

The embodiments of the invention described previously with reference to the accompanying drawings comprise a computer system and processes performed by the computer system. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, such as a CD-ROM, or magnetic recording medium, such as a floppy disk or hard disk. The carrier may be an electrical or optical signal which may be transmitted via an electrical or an optical cable or by radio or any other means.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Although the present disclosure has been particularly shown and described with reference to the preferred embodiments and various aspects thereof, it will be appreciated by those of ordinary skill in the art that various changes and modifications may be made without departing from the spirit and scope of the disclosure. It is intended that the appended claims be interpreted as including the embodiments described herein, the alternatives mentioned above, and all equivalents thereto.

Features, integers, characteristics, or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or prior to this specification in connection with this application and which are open to public inspection with this specification, and the contents of all such papers and documents are incorporated herein by reference.

## Claims

1. A computer-implemented method for detecting mounting of an object at a terminal device, the method comprising:
receiving detection data from one or more sensors,
generating a wavelet matrix based on the detection data, and
generating an ambient environment alert based on the wavelet matrix.

2. The method of claim 1, wherein the ambient environment alert comprises an ambient weather alert, and optionally wherein the ambient weather alert comprises a rain alert.

3. The method of claim 1, further comprising:
converting the detection data from a time domain to a frequency domain using a wavelet transform to obtain converted detection data, and
generating the wavelet matrix based on the converted detection data.

4. The method of claim 1, further comprising:
identifying one or more features in the wavelet matrix,
wherein generating the ambient environment alert being comprises generating the ambient environment alert based on the one or more identified features.

5. The method of claim 4, wherein identifying the one or more features in the wavelet matrix comprises identifying the one or more features using a first machine learning model, wherein optionally the first machine learning model comprises a convolutional neural network model.

6. The method of claim 1, further comprising:
determining, based on the detection data, a sequence comprising (i) an idle state during a first time period, (ii) an approach state during a second time period, and (iii) an object mounting state during a third time period, and optionally
generating a tamper alert based on the determined sequence.

7. The method of claim 6, wherein, during the idle state, the detection data comprises a signal having a substantially constant amplitude at a first level, and optionally wherein, during the approach state, the detection data comprises a signal having a negative peak amplitude that is lower than the first level.

8. The method of claim 6, wherein, during the object mounting state, the detection data comprises a signal having a substantially constant amplitude at a third level that is higher than the first level.

9. The method of claim 6, wherein determining the sequence comprises determining the sequence using a second machine learning model, and optionally wherein the second machine learning model comprises a long short-term memory recurrent neural network model.

10. The method of claim 6, wherein the sequence determination occurs at least partially in parallel with the wavelet matrix generation.

11. The method of claim 1, wherein the terminal device comprises an automated teller machine device.

12. The method of claim 1, wherein the object comprises a card skimmer device.

13. The method of claim 1, further comprising:
identifying a plurality of peaks in a historical data set,
identifying a subset of the historical data set based on the identified plurality of peaks,
identifying a set of features from the subset of the historical data,
augmenting the identified set of features using a labelled data set to obtain a training data set, and
training, based on the training data set, at least one of a first machine learning model or a second machine learning model to perform ambient weather detection or tamper detection, respectively.

14. A data processing system for detecting mounting of an object at a terminal device, the system comprising a processor and a memory storing machine-executable instructions, the processor configured to access the memory and execute the machine-executable instructions to:
receive detection data from one or more sensors,
generate a wavelet matrix based on the detection data, and
generate an ambient environment alert based on the wavelet matrix.

15. A computer program product comprising a non-transitory computer-readable medium storing machine-executable instructions executable by a processor to perform a method, comprising:
receiving, over a first period of time, first detection data from one or more sensors,
generating a wavelet matrix based on the first detection data,
generating an ambient environment alert signal based on the wavelet matrix,
receiving, over a second period of time, second detection data from the one or more sensors,
determining a sequence from the second detection data, and
generating a tamper alert signal responsive to determining the sequence.
